**Europäisches Patentamt**

**European Patent Office**

**Office européen des brevets**

(19)

(11) Veröffentlichungsnummer : **0 617 807 B1**

## (12) EUROPÄISCHE PATENTSCHRIFT

(45) Veröffentlichungstag der Patentschrift :
**21.06.95 Patentblatt 95/25**

(21) Anmeldenummer : **93901702.6**

(22) Anmeldetag : **17.12.92**

(86) Internationale Anmeldenummer :
**PCT/EP92/02942**

(87) Internationale Veröffentlichungsnummer :
**WO 93/12477 24.06.93 Gazette 93/15**

(51) Int. Cl.⁶ : **G05D 13/62**

(54) **VERFAHREN UND ANORDNUNG ZUR VERRINGERUNG VON SCHWINGUNGEN BEI LASTSTÖSSEN BEI ANTRIEBEN MIT SCHWINGUNGSFÄHIGER MECHANISCHER ANORDNUNG.**

(30) Priorität : **18.12.91 DE 4141897**

(43) Veröffentlichungstag der Anmeldung :
**05.10.94 Patentblatt 94/40**

(45) Bekanntmachung des Hinweises auf die
Patenterteilung :
**21.06.95 Patentblatt 95/25**

(84) Benannte Vertragsstaaten :
**AT CH DE ES GR LI**

(56) Entgegenhaltungen :
**DE-A- 3 932 214**
**DE-A- 4 132 825**
**REGELUNGSTECHNIK Nr. 11, 1978, MUN-**
**CHEN DE Seiten 349 - 380 WEIHRICH'Dreh-**
**zahlregelung von Gleichstromantrieben unter**
**Verwendung eines Zustands- und Störgrössen**
**Beobachters'**
**ELEKTRIE Bd. 43, Nr. 8, 1989, BERLIN DE**
**Seiten 306 - 311 RIEFENSTAHL 'Digitale Dreh-**
**zahlregelung mit Beobachter'**

(56) Entgegenhaltungen :
**AUTOMATISIERUNGSTECHNIK - AT Bd. 37,**
**Nr. 1, Januar 1989, MUNCHEN DE Seiten 22 -31**
**BRANDENBURG 'Einfluss und Kompensation**
**von Lose und Coulombscher Reibung bei ei-**
**nem drehzahl- und lageregelten, elasti-**
**schen Zweimassensystem'**

(73) Patentinhaber : **SIEMENS**
**AKTIENGESELLSCHAFT**
**Wittelsbacherplatz 2**
**D-80333 München (DE)**
Patentinhaber : **Rheinbraun**
**Aktiengesellschaft**
**Stüttgenweg 2**
**D-50935 Köln (DE)**

(72) Erfinder : **NEUFFER, Ingemar**
**Rudelsweiherstr. 49**
**D-8520 Erlangen (DE)**
Erfinder : **KELLER, Christian**
**Tellstr. 22**
**D-8500 Nürnberg (DE)**
Erfinder : **HARTLIEF, Franz-Josef**
**Benzelrather Str. 17**
**D-5020 Frechen-Grefrath (DE)**

(74) Vertreter : **Fuchs, Franz-Josef, Dr.-Ing. et al**
**Postfach 22 13 17**
**D-80503 München (DE)**

EP 0 617 807 B1

## Beschreibung

Verfahren und Anordnung zur Verringerung von Schwingungen bei Laststößen bei Antrieben mit schwingungsfähiger mechanischer Anordnung

Die Erfindung betrifft ein Verfahren und eine Anordnung zur Verringerung von Schwingungen bei Laststößen bei geschwindigkeitsgeregelten Antrieben mit schwingungsfähiger mechanischer Anordnung.

Derartige Antriebe mit schwingungsfähiger mechanischer Anordnung liegen beispielsweise bei großen Baggern wie Braunkohlebaggern vor, bei denen der auf einem Unterbau ruhende Oberbau mit dem daran angeordneten Schaufelrad zum Abbaggern von Material verschwenkt wird. Für eine Regelung der Verschwenkgeschwindigkeit bestehen besondere Anforderungen, weil das zu regelnde System, bestehend aus Antriebsmotoren, Getriebe und Oberbau, ein schwingungsfähiges System darstellt. Zusätzlich wirken beim Anfahren und Reversieren aufgrund von hohen Getriebelosen (Getriebespiel) erhebliche Momentenstöße auf das System; während elektrische Maschinen diese Stöße problemlos vertragen, werden die Getriebe erheblich beansprucht und abgenutzt, was im ungünstigsten Fall sogar bis zum Bruch führt. Das Führungsverhalten ohne Lose ist bisher durch den Einsatz eines sogenannten Sanft-Hochlaufgebers, dessen Ruckzeit auf die Periodendauer der Eigenfrequenz abgestimmt sein muß, befriedigend gelöst, jedoch ist die Dämpfung beim Lastverhalten, beispielsweise beim Auftreten von Laststößen, ungenügend.

Gemäß der Erfindung wird dieses Problem durch die in den Patentansprüchen angegebenen Maßnahmen gelöst.

Das Dokument: ELEKTRIE, Bd. 43, Nr. 8, 1989; Berlin, DD, Seiten 306-311; Reifenstahl: "Digitale Drehzahlregelung mit Beobachter" offenbart einen Drehzahlregler, der Störgrößeneinwirkungen durch Störgrößenkompensation schnell ausregelt. Der Sachverhalt der Oberbegriffe der Ansprüche 1 und 7 ist aus diesem Dokument bekannt.

Als Abhilfe wird der Einsatz einer Lastaufschaltung vorgeschlagen, die bei Laststößen in die Geschwindigkeitsregelung absenkend eingreift und dadurch eine Dämpfung erzeugt. Auch die nach dem Anfahren mit voll wirksamer Lose entstehenden Schwingungen werden gut gedämpft; die Motor- und Oberbaugeschwindigkeit nähern sich schnell einander an.

Lange Ruckzeiten verwehren dem Baggerführer den direkten Zugriff auf den Antrieb. Mit einer Ruckaufschaltung aus dem Sanft-Hochlaufgeber auf die Geschwindigkeitsregelung ist es möglich, ohne Einbußen im Führungsverhalten kürzere Ruckzeiten einzustellen und damit auch kürzere Umsteuerzeiten zu erreichen.

Verspannte Antriebe können den Einfluß der Lose, der beim Lastwechsel im Getriebe entsteht, vermindern. Eine Vollverspannung hat gute Regeleigenschaften, jedoch benötigt sie größere Motor- und Getriebeleistung. Eine Teilverspannung arbeitet nur bis zum halben Nennmoment mit echter Verspannung, darüber hinaus tritt wieder Lose auf. Allerdings kommt man bei der Teilverspannung mit den bisherigen Motor- und Getriebeleistungen aus.

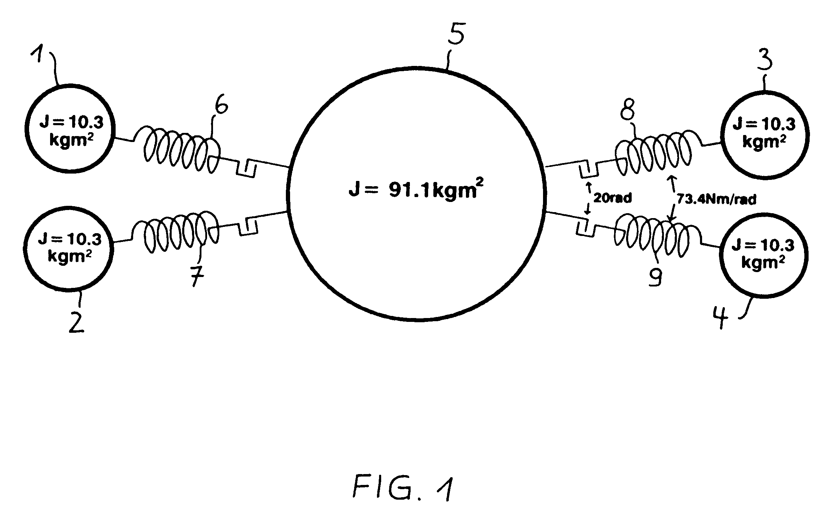

Im folgenden wird die Erfindung anhand der Figuren 1 bis 19 der Zeichnung näher erläutert.

Ein Braunkohlebagger weist üblicherweise einen Oberbau und einen Unterbau auf, wobei der Oberbau drehbar in einer Kugelbahn auf dem Unterbau ruht und zum Abbaggern des Materials (Kohle, Lehm oder Sand) um ca. +/-60 Grad geschwenkt wird. Dabei wird der Oberbau von zwei oder vier Motoren angetrieben, die über Getriebe mit einer Untersetzung von etwa 1:10 000 auf einen Zahnkranz am Oberbau einwirken. Die Getriebe weisen wegen der großen Untersetzung eine starke Elastizität und eine beachtliche Lose (Getriebespiel) auf.

Fig. 1 zeigt als erste Näherung der Struktur die Massen der vier Motoren 1, 2, 3 und 4, die mit der Masse des Oberbaus 5 über die Elastizität der Getriebe bezeichnende Federn 6, 7, 8 und 9 verbunden sind. Das Bild ist aus Gründen der leichteren Darstellung als translatorisches System gezeichnet, obwohl natürlich in Wirklichkeit ein rotatorisches vorliegt. Die im Bild angegebenen Zahlenwerte für die Massenträgheitsmomente J der einzelnen Massen 1 bis 5 stammen aus Messungen an einem Braunkohlebagger und aus entsprechenden Konstruktionsdaten. Die Elastizität der Getriebe ist so groß, daß sich der jeweilige Motor, z. B. 1, bei festgehaltenem Oberbau 5 um 820 Grad drehen müßte, bis sich das Nennmoment einstellen würde. Auf eine Berücksichtigung der immer im System vorhandenen Reibung wurde wegen Geringfügigkeit verzichtet. Hat man trotz dieser Vernachlässigung bei der Simulation einen befriedigend gedämpften Verlauf erreicht, so kann im praktischen Betrieb die Dämpfung nur besser sein.

Die Drehung eines Massekörpers wird durch zwei Differentialgleichungen bestimmt, die in integraler Form wie folgt lauten: $\omega = \int I/J \cdot M \cdot dt$ und $\varphi = \int w \cdot dt$. Dabei bezeichnen $\omega$ die Winkelgeschwindigkeit, $\varphi$ den Drehwinkel, $J$ das Massenträgheitsmoment und $M$ das auf den Massenkörper wirkende Drehmoment. Im folgenden werden normierte Größen verwendet, wodurch erreicht wird, daß bei den Nennwerten von Drehmoment $M_N$ und Winkelgeschwindigkeit $\omega_N$ der Wert 1 auftritt. Dabei ergeben sich für die obigen Gleichungen folgende normierte Gleichungen $v = I/T \int M \cdot dt$ und $s = \int v \cdot dt$, wobei $T = J \cdot \omega_N/M_N$ eine Integrationszeitkonstante ist und $v$ die Geschwindigkeit und $s$ den zurückgelegten Weg bezeichnen.

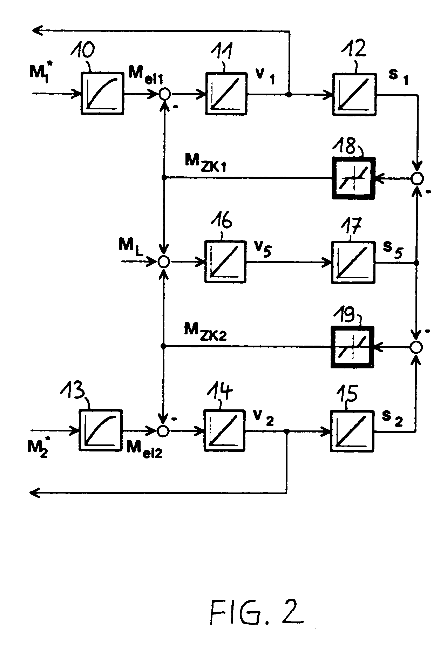

Ausgehend von den oben angegebenen Gleichungen zeigt Fig. 2 ein Blockschaltbild der von der Struktur nach Fig. 1 gebildeten Regelstrecke.

Um das Blockschaltbild zu vereinfachen, werden jeweils zwei gegenüberliegende Motoren, nämlich Motor 1 und Motor 4 bzw. Motor 2 und Motor 3 zu je einem Ersatzmotor mit der Indexbezeichnung 1 bzw. 2 zusammengefaßt. Diese Ersatzmotoren haben jeweils die gleiche Nennwinkelgeschwindigkeit $\omega_N$=104,7 rad/s wie vorher, aber ein doppeltes Nenndrehmoment $M_N$=2100 Nm und ein doppeltes Massenträgheitsmoment $J_1=J_2$= 20,6 kgm$^2$. Es hätten auch die vier Motoren 1 bis 4 zu einem einzigen Ersatzmotor zusammengefaßt werden können, da alle vier Motoren 1 bis 4 mit gleichem Moment und gleicher Drehzahl arbeiten. Später werden die verspannten Antriebe behandelt, bei denen die zwei Ersatzmotoren mit unterschiedlichen Momenten beaufschlagt werden. Im weiteren wird zur Vereinfachung das Vorwort "Ersatz" weggelassen und nur von Motoren gesprochen. Durch diese Zusammenfassung ist die Struktur jetzt auf drei Massen, die der beiden Ersatzmotoren und die des Oberbaus, und zwei Federn reduziert worden.

Im Blockschaltbild von Fig. 2 ist der Momentensollwert $M_1^*$ des Motors 1 einem Verzögerungsglied 10 zugeführt, das die Momentenregelung für den Motor 1 in Form einer Verzögerung mit einer Zeitkonstanten nachbildet. Im vorliegenden Fall wird hierzu ein Wert von 20 ms angenommen. Das Ausgangssignal $M_{el1}$ des Verzögerungsgliedes 10 ist das elektrische Moment des Motors 1. Dabei ist es unwesentlich, ob ein Gleich- oder Drehstromantrieb verwendet wird.

Die erste oben angegebene Differentialgleichung des Massekörpers wird für den Motor 1 durch ein Integrierglied 11 als sogenannte mechanische Zeitkonstante $T_1=J_1\omega_N/M_N$=1,02 s dargestellt. Als Eingangsgröße wirkt die Differenz aus dem elektrischen Moment $M_{el1}$ und dem Zahnkranzmoment $M_{ZK1}$, auf das unten noch näher eingegangen wird. Das Ausgangssignal des Integriergliedes 11 ist die normierte Motorwinkelgeschwindigkeit; man kann diese Größe wegen der Normierung auch als Motordrehzahl oder als Motorgeschwindigkeit $v_1$ auffassen. Die Motorwinkelgeschwindigkeit bzw. die Motorgeschwindigkeit $v_1$ kann entsprechend der zweiten, oben angegebenen Gleichung mit Hilfe eines weiteren Integriergliedes 12 mit der Integrierzeit von 1 s zum Drehwinkelweg $s_1$ aufintegriert werden.

Dieselben Zusammenhänge gelten auch für den zweiten Motor 2, dessen Momentensollwert $M_2^*$ durch ein Verzögerungsglied 13 in das elektrische Moment $M_{el2}$ des Motors 2 umgewandelt wird. Ein Integrierglied 14 erzeugt aus der Differenz zwischen dem elektrischen Moment $M_{el2}$ und dem noch zu erläuternden Zahnkranzmoment $M_{ZK2}$ die Motorgeschwindigkeit $v_2$, die in dem weiteren Integrierglied 15 zu dem

Weg $s_2$ aufintegriert wird.

Bei dem Oberbau 5 des Baggers ergibt sich die Geschwindigkeit $v_5$ durch Aufintegration der Summe aus den beiden Zahnkranzmomenten $M_{ZK1}$ und $M_{ZK2}$ und dem Belastungsmoment $M_L$, mit dem das zu fördernde Material auf das Schaufelrad des Baggers und damit auf dessen Oberbau 5 drückt. Diese Aufintegration geschieht in einem Integrierglied 16 mit der mechanischen Zeitkonstante $T_5 = J_5\cdot\omega_N/M_N$=4,54 s. In einem weiteren Integrierglied 17 wird durch Integration der Geschwindigkeit $v_5$ des Oberbaus 5 der von diesem zurückgelegte Weg $s_5$ gebildet.

Die bereits erwähnten Zahnkranzmomente $M_{ZK1}$ und $M_{ZK2}$ an den Stellen, an denen die Ritzel der Motoren 1 und 2 in den Zahnkranz des Oberbaus 5 eingreifen, ergeben sich in den die Federkennlinie der Getriebe nachbildenden Blöcken 18 und 19 aus den Wegdifferenzen $s_1$-$s_5$ multipliziert mit der Federkonstanten c unter Berücksichtigung der durch eine Totzone in der Federkennlinie repräsentierten Lose. Der Wert für die Federkonstante beträgt bei dem hier angegebenen Ausführungsbeispiel c = 7,32.

Die in Fig. 1 gezeigte Struktur stellt ein schwingungsfähiges System dar, das je nach der Anregung mit verschiedenen Eigenfrequenzen antwortet. Die folgenden Eigenfrequenzen sind ohne Lose berechnet.

Die erste Eigenfrequenz erhält man, wenn man beide Motorgeschwindigkeiten $v_1$ und $v_2$ als konstant annimmt, wie es näherungsweise bei einer Geschwindigkeitsregelung gegeben ist. Ein Momentenstoß auf den Oberbau 5 bringt diesen zum Schwingen, wobei die beiden Ersatzfedern zwischen den Ersatzmotoren und dem Oberbau 5 parallel arbeiten. Die Periodendauer dieser Eigenfrequenz ergibt sich mit $T_{p1} = 2\pi\cdot\sqrt{J_5/(2c)}$ und beträgt bei Verwendung der normierten Größen $T_{p1} = 2\pi\cdot\sqrt{T_5/(2c)}$ = 3,5 s.

Eine zweite Eigenfrequenz ergibt sich, wenn ohne Geschwindigkeitsregelung die Motoren mit einem konstanten Moment beaufschlagt werden, wie dies z. B. bei Momentenregelung auftritt. Beim Anfahren mit Moment entsteht eine Schwingung, bei der Motoren und Oberbau 5 gegeneinander schwingen. Die Periodendauer hat den Wert $T_{p2} = 2\pi\cdot\sqrt{(J_1 + J_2)\cdot J_5/(J_1 + J_2 + J_5)\cdot 2c}$ und berechnet sich bei Verwendung der normierten Größen $T_1$, $T_2$ und $T_5$ zu 1,95 s.

Die dritte Eigenfrequenz entsteht, wenn ein Motor 1 oder 2 frei gegen den als fest stehend angenommenen Oberbau 5 schwingt. Die Periodendauer dieser Eigenfrequenz liegt bei $T_{p3} = 2\pi\cdot\sqrt{J_{1,2}/c}$ und berechnet sich bei Verwendung normierter Größen $T_1$ oder $T_2$ zu 2,35 s.

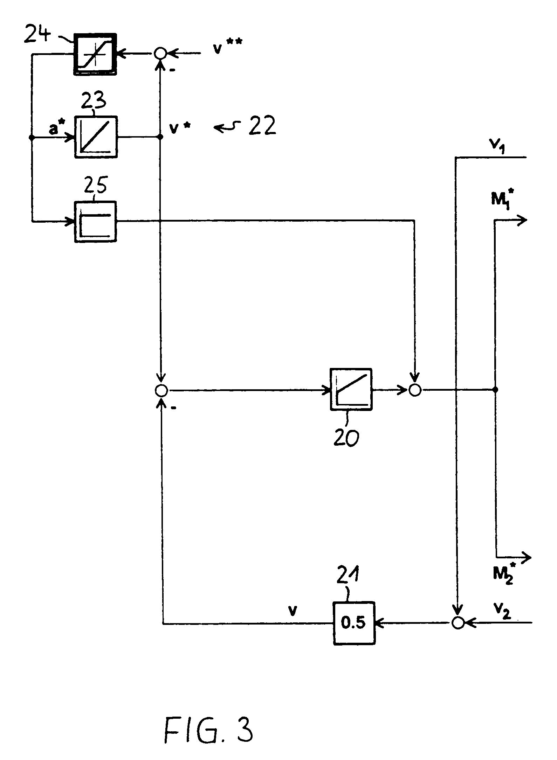

Fig. 3 zeigt das Blockschaltbild einer herkömmlichen Geschwindigkeitsregelung. Die beiden Momentensollwerte $M_1^*$ und $M_2^*$ sind parallel geschaltet und werden gemeinsam von einem Geschwindigkeitsregler 20 erzeugt. Der Geschwindigkeitsregler 20 ist als PI-Regler mit einem P-Anteil von 12,5 und einem I-Anteil von 0,2 s ausgebildet. Dem Geschwindigkeitsregler 20 wird eingangsseitig die Differenz zwischen einem Geschwindigkeits-Istwert v und einem Geschwindigkeits-Sollwert v* zugeführt. Der Geschwindigkeits-Istwert v wird in einem Mittelwertbildner 21 aus den beiden Motorendrehzahlen $v_1$ und $v_2$ gebildet. Bei Bedarf kann dieser Wert auch mit 10 oder 20 ms geglättet werden, um Oberschwingungen oder Einstreuungen zu vermindern, bzw. um Übertragungszeiten zwischen verwendeten Prozessoren zu berücksichtigen.

Der Geschwindigkeits-Sollwert v* kommt von einem einfachen Hochlaufgeber 22, der einen beschleunigungsbegrenzten Hochlauf ermöglicht. Der Hochlaufgeber 22 besteht aus einem Integrator 23, der den Geschwindigkeits-Sollwert v* ausgibt, und einem diesem vorgeschalteten Übersteuerverstärker 24 mit hoher Verstärkung und Begrenzung seines Ausgangs auf einen gewünschten Beschleunigungswert a*. Als Eingangsgröße erhält der Übersteuerverstärker 24 die Differenz von einem z.B. sprungartig von Hand vorgegebenen Geschwindigkeits-Sollwert v** und dem eigentlichen Geschwindigkeits-Sollwert v*. Solange diese Differenz nicht Null ist, führt der Integrator 23 eine mit konstanter Steilheit erfolgende Anpassung des Wertes v* an den Wert v** durch. Aus dem Beschleunigungswert a* im Hochlaufgeber 22 wird in dem Schaltungsblock 25 das erforderliche Beschleunigungsmoment der Motoren 1 und 2 ermittelt und direkt den Momentenregelungen als Momentenvorsteuerung vorgegeben werden.

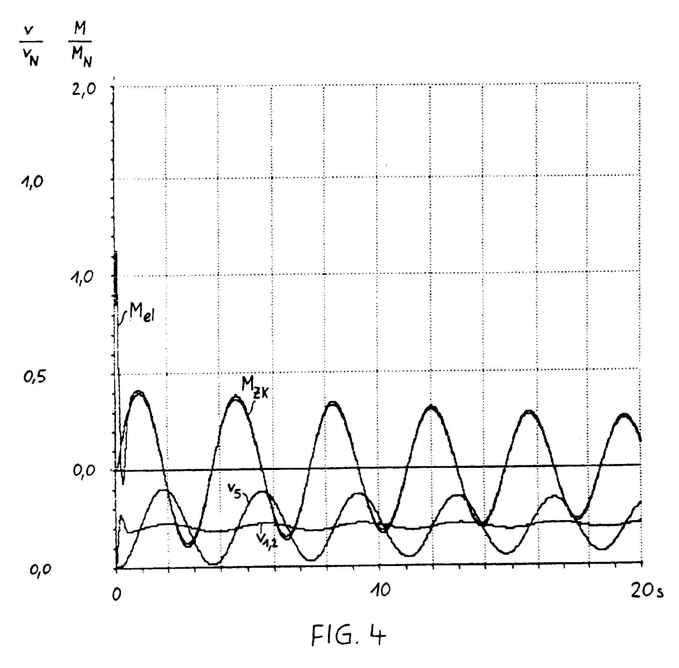

Bei der folgenden Beschreibung von verschiedenen Simulationen soll mit einem sprungförmigen Verlauf des Geschwindigkeits-Sollwert begonnen werden. Ein solcher Verlauf kann trotz des Hochlaufgebers 22 praktisch erreicht werden, wenn eine sehr hohe Beschleunigung eingestellt wird. Bei einem Sollwertstoß von nur 10% wird im Moment eine Schwingung von etwa 40% angestoßen. Fig. 4 zeigt folgende Größen als Antwort auf einen Geschwindigkeits-Sollwertsprung:
das Motormoment $M_{el}$, das Zahnkranzmoment $M_{ZK}$, die Motorgeschwindigkeit $v_{1,2}$ und die Oberbaugeschwindigkeit $v_5$.

Die Motorgeschwindigkeit $v_{1,2}$ erreicht den Sollwert in kurzer Zeit. Gleichzeitig wird dabei eine unerwünschte Momentenspitze ausgelöst. Die Oberbaugeschwindigkeit $v_5$ dagegen steigt langsamer an und geht in eine Schwingung über. Sehr gut ist die Periodendauer der Eigenfrequenz zu erkennen, die wegen der nicht ganz konstanten Geschwindigkeit des Motors geringfügig größer als 3,5 s ist.

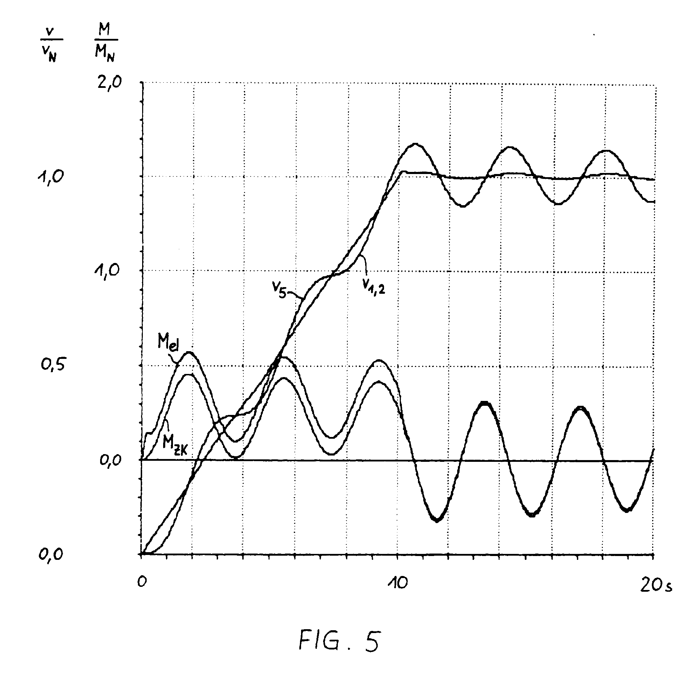

Vermindert man bei dem Hochlaufgeber 22 die Beschleunigung auf normale Werte (z.B. Hochlauf in 10s), so verschwindet zwar, wie Fig. 5 zeigt, die Anfahrspitze im Motormoment $M_{el}$, die Schwingung des Systems bleibt jedoch im Prinzip erhalten. Das Führungsverhalten ist daher noch immer unbefriedigend.

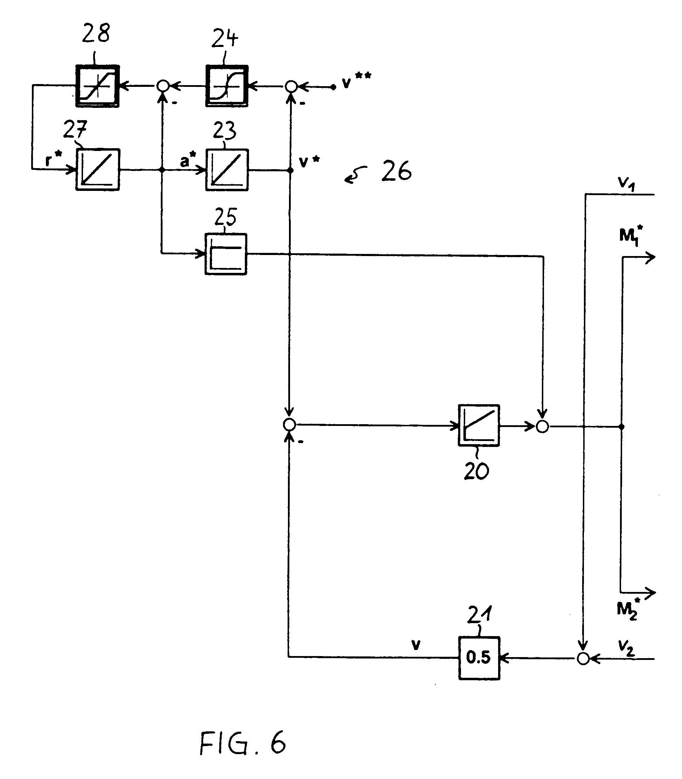

Eine erste Verbesserung wird durch eine Erweiterung des einfachen Hochlaufgebers zu einem Sanft-Hochlaufgeber erweitert, wie dieser in Fig. 6 dargestellt ist. Damit kann ein Verlauf des Geschwindigkeits-Sollwertes v* erzeugt werden, bei dem neben der Beschleunigung jetzt auch der Ruck begrenzt ist. Hierzu wird ein weiterer Integrator 27 dem ersten Integrator 23 vorgeschaltet, so daß jetzt der Ruck r* zur Beschleunigung a* und die Beschleunigung a* zur Geschwindigkeit v* integriert werden. Dem Übersteuerverstärker 24 wird ein Glied 28 mit Wurzelfunktion vorgeschaltet.

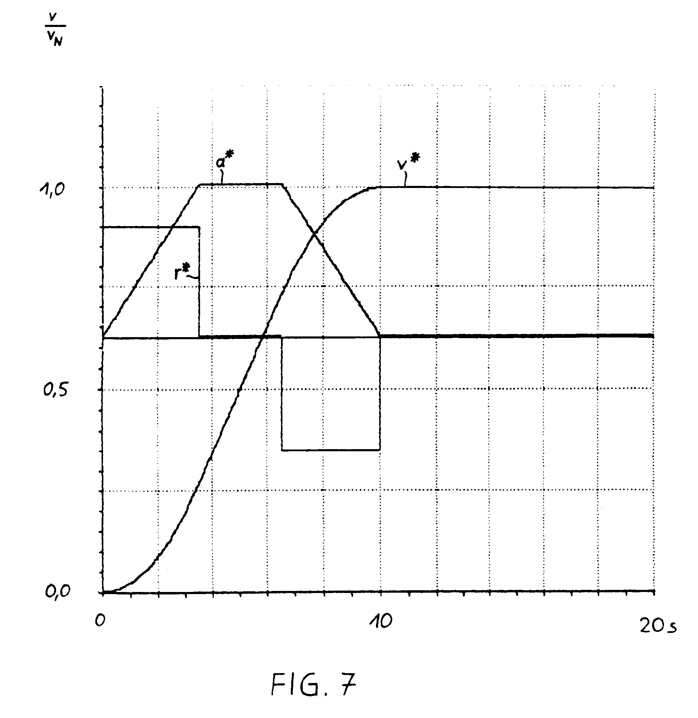

Als Beispiel der Arbeitsweise des Sanft-Hochlaufgebers 26 zeigt Fig. 7 einen Hochfahrvorgang, wobei die Geschwindigkeit v*, die Beschleunigung a* und der Ruck r* dargestellt sind. Die Hochfahrzeit beträgt 10s und die Ruckzeit 3,5s. Als Ruckzeit wird dabei die Zeit bezeichnet, während der der Ruck r* seinen maximalen Wert erreicht.

Es sei darauf hingewiesen, daß eine zweite Erweiterung des Hochlaufgebers 22 zu einem Führungsgrößengeber möglich ist. Hierbei wird ein Integrator dem Sanft-Hochlaufgeber 26 nachgeschaltet, mit dem der Geschwindigkeits-Sollwert v* zum Wegsollwert s* integriert werden kann. Diese Ergänzung ist bei allen Wegregelungen erforderlich, sie ist beispielsweise zur Einhaltung des seitlichen Begrenzungswinkels beim Bagger einsetzbar.

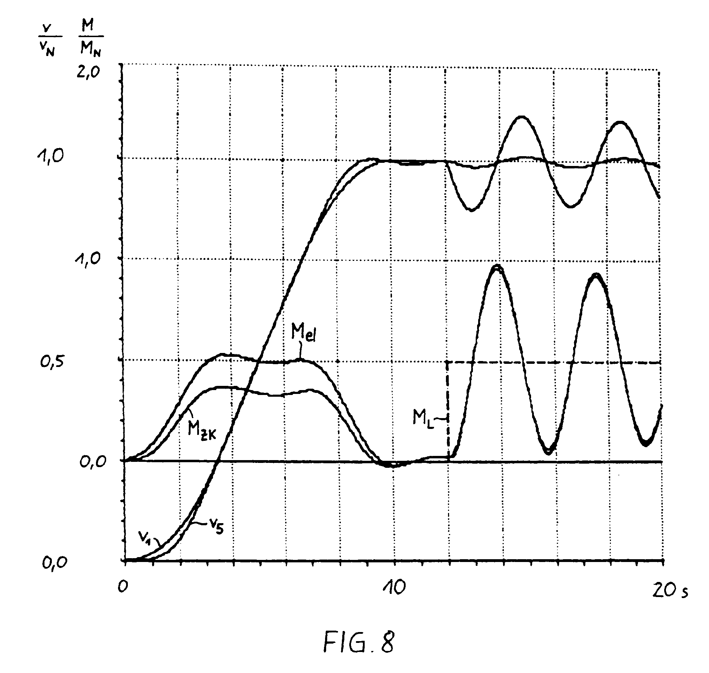

Man kann zeigen, daß das Schwingungsverhalten der Antriebe beim Anfahren weitgehend beseitigt werden kann, wenn man die Ruckzeit, die am Sanft-Hochlaufgeber durch entsprechende Begrenzungen einzustellen ist, genau gleich der Periodendauer $T_{pl}$ der ersten Eigenfrequenz wählt. Fig. 8 zeigt den damit erreichten Kurvenverlauf, wobei noch keine Lose berücksichtigt wurde. Die Schwingungen beim Anfahren sind fast verschwunden. Im rechten Teil von Fig. 8, ab 12s, wurde ein Laststoß vorgenommen. Die Schwingung tritt wieder voll auf. Man erkennt, daß der Sanft-Hochlaufgeber 26 zwar das Führungsverhalten, dagegen nicht das Lastverhalten verbessern kann.

Die Messungen an einem Bagger ergaben, daß das Schwingungsverhalten beim Anfahren ganz wesentlich davon abhängt, in welcher Lage die Zähne des Getriebes innerhalb der Lose (des Getriebespiels) zum Startzeitpunkt standen. Bei ganz herausgedrehter Lose, d. h. wenn zwischen den Zähnen des Ritzels und denen des Zahnkranzes in Drehrichtung gesehen kein Spiel besteht, beobachtete man einen Anfahrvorgang ohne Schwingungen; dagegen wurden starke Schwingungen festgestellt, wenn die Lose, also das Getriebespiel voll wirksam war. Die in der Praxis vorkommenden Anfahrvorgänge liegen also - je nach Vorgeschichte - irgendwo zwischen diesen beiden Eckwerten. Die Zahnstellungen mit herausgedrehter oder voll wirksamer Lose wurden durch ganz langsames Drehen der Motoren in bzw. gegen die beabsichtigte Fahrtrichtung vor dem eigentlichen Hochfahren erreicht.

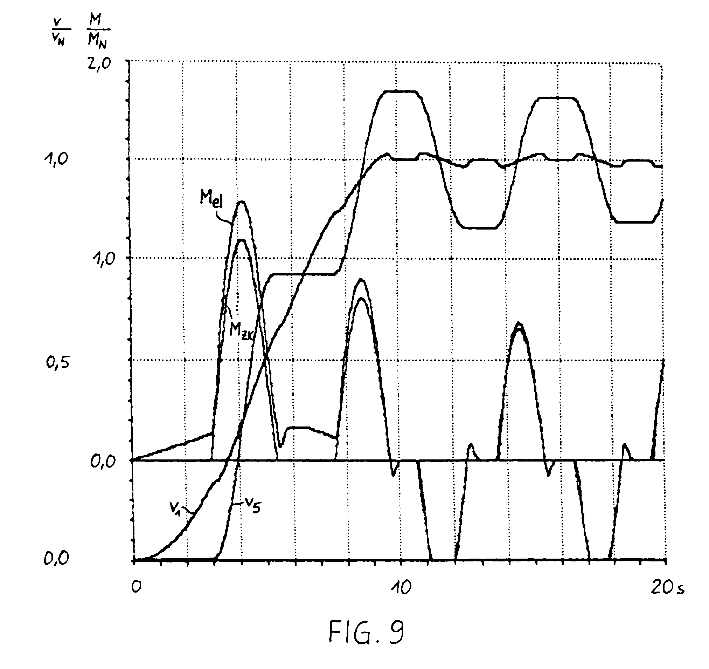

In Fig. 9 ist ein Anfahrvorgang dargestellt, allerdings mit voll wirksamer Lose. Man stellt fest, daß der Oberbau 5 sich 3s lang überhaupt nicht bewegt, bis die Lose überwunden ist. Der Oberbau 5 wird sodann stark beschleunigt, der Geschwindigkeitsregler 20 versucht einen Einbruch in der Motorgeschwindigkeit $v_{1,2}$ zu verhindern und erhöht das Motormoment $M_{el}$ auf den 1,3 fachen Nennwert. Das Zahnkranzmoment $M_{ZK}$ steigt bis auf das 1,1 fache des Nennmoments $M_n$ an, ein Wert, der in der Praxis nicht erlaubt wäre. Trotz Einsatz des Sanft-Hochlaufgebers 26 tritt eine starke Schwingung beim Anfahren auf, weil die Lose wie ein Laststoß wirkt.

Das Ziel für eine Verbesserung der bisherigen Geschwindigkeitsregelung muß also sein, die nach einem Laststoß auftretenden Schwingungen zu beseitigen.

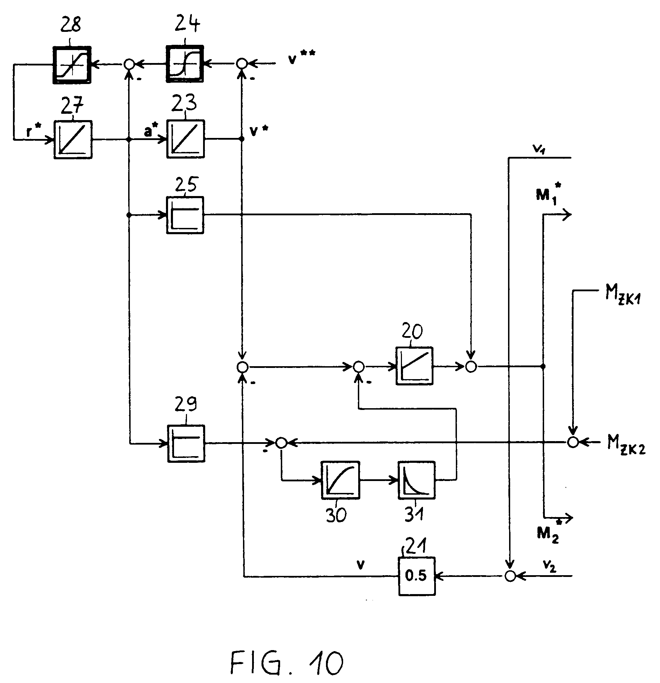

In Fig. 10 ist ein Beispiel für die erfindungsgemäße Lastaufschaltung bei einem Sanft-Hochlaufgeber entsprechend Fig. 6 dargestellt. Sie verwendet das Zahnkranzmoment $M_{ZK}$, von dem hier im Bild zunächst angenommen wird, als ob es unmittelbar gemessen werden könnte. Später wird gezeigt, wie durch einen sogenannten Lastbeobachter entsprechende Ersatzgröße bereitgestellt werden kann. Dieses Zahnkranzmoment $M_{ZK}=M_{ZK1}+M_{ZK2}$ wird von seinem Beschleunigungsanteil befreit, indem in einem Schaltungsblock 29 aus dem Beschleunigungswert a* das daraus resultierende Beschleunigungsmoment gebildet und von dem Zahnkranzmoment $M_{ZK}$ subtrahiert wird. Das Differenzsignal wird in einem Schaltungsblock 30 geringfügig geglättet und über ein Nachgebeglied (Differenzierglied 31) mit negativen Vorzeichen dem Eingang des Geschwindigkeitsreglers 20 zugeführt. Ohne das Nachgebeglied 31 würde die Lastaufschaltung zwar auch eine dämpfende Wirkung haben, doch würde bei statischer Belastung des Oberbaus 5 durch das Schaufelrad des Baggers ein bleibender Geschwindigkeitsfehler entstehen.

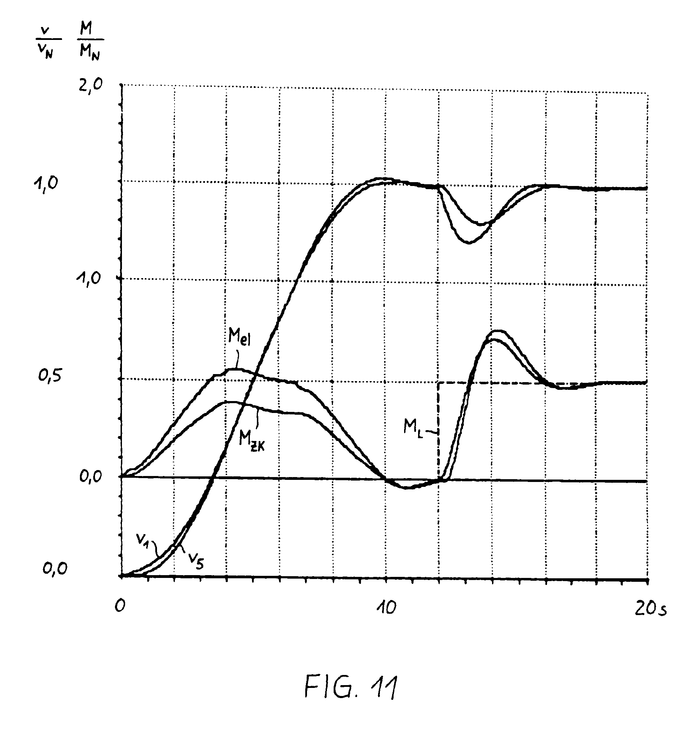

In Fig. 11 ist die vorteilhafte Wirkung der Lastaufschaltung zu erkennen. Während das Führungsverhalten sich gegenüber vorher kaum verändert hat, ist beim Laststoß der dämpfende Einfluß in Geschwindigkeit $v_{1,2}$ und Moment $M_{el}$, $M_{ZK}$ klar ersichtlich.

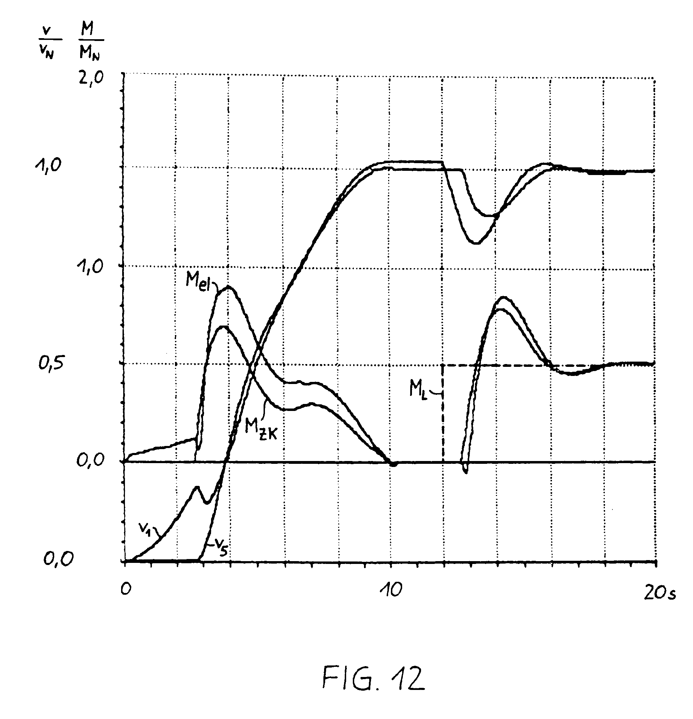

Besonders deutlich wird die Wirkung der Lastaufschaltung beim Anfahren mit voll wirksamer Lose, wie dies in Fig. 12 gezeigt ist. Nach Überwindung der Lose vermindert das ansteigende Zahnkranzmoment $M_{ZK}$ die Motorgeschwindigkeit $v_{1,2}$ so stark, daß sich nach kurzer Zeit Motor- und Oberbaugeschwindigkeit $v_{1,2}$ und $v_5$ weitgehend angenähert haben und nicht mehr gegeneinander schwingen. Das maximale Zahnkranzmoment $M_{ZK}$ steigt jetzt nur noch bis zum

0,7 fachen Nennmoment $M_n$ an.

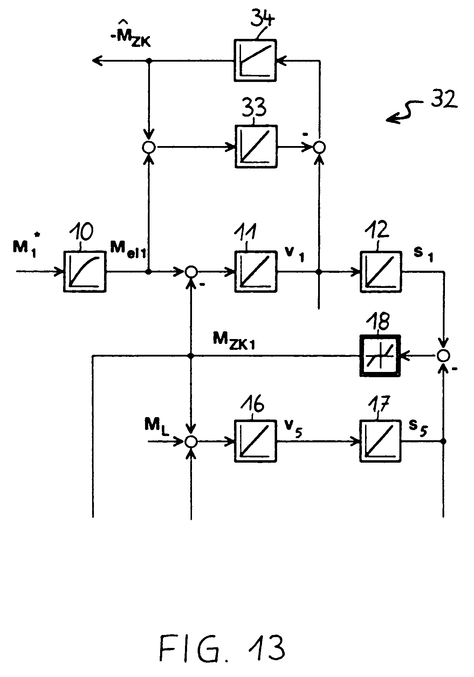

Anhand von Fig. 13 wird im folgenden noch näher auf die Schaltung des bereits erwähnten Lastbeobachters 32 eingegangen. Dabei wird im folgenden nur die Bildung eines Ersatzwertes $\hat{M}_{ZK1}$ für das Zahnkranzmoment $M_{ZK1}$ den ersten Motor 1 erläutert, weswegen in Fig. 13 nur die hierfür interessierenden Funktionsblöcke 10, 11, 12, 16, 17 und 18 der Regelstrecke aus Fig. 2 dargestellt sind. Die Bildung eines Ersatzwertes $\hat{M}_{ZK2}$ für den zweiten Motor 2 erfolgt analog. Der Lastbeobachter 32 enthält einen Integrator 33, dem eingangsseitig die Differenz zwischen dem elektrischen Moment $M_{el1}$ des Motors 1 und dem zu erzeugenden Ersatzwert $\hat{M}_{ZK1}$ zugeführt wird. Der von dem Integrator 33 an seinem Ausgang erzeugte Geschwindigkeitswert wird mit dem Istwert der Motorgeschwindigkeit $v_1$ verglichen, wobei die Differenz zwischen den beiden Werten einem PI-Regler 34 zugeführt wird, der an seinem Ausgang den Ersatzwert $\hat{M}_{ZK1}$ für das beobachtete Zahnkranzmoment $M_{ZK1}$ erzeugt.

Der Vorteil dieser Dämpfung mit Lastaufschaltung liegt darin, daß sie als Zusatzschaltung zu der bewährten Regelanordnung mit überlagerter Geschwindigkeitsregelung und unterlagerter Momentenregelung eingesetzt werden kann (einfache Momentenbegrenzung).

Wie zuvor in Verbindung mit Fig. 8 erläutert, muß die Ruckzeit auf die Periodendauer $T_{pl}$ der ersten Eigenfrequenz abgestimmt sein. Für die Bedienung des Schwenkwerkes von Hand ist es vorteilhaft, wenn die Antriebe unmittelbar Bedienungen des Baggerführers reagieren. Aus diesem Grund wäre eine kürzere Ruckzeit als 3.5s von Vorteil für die Handhabung des Schwenkwerkes von Vorteil. Außerdem werden mit einer kürzeren Ruckzeit auch die Hochlaufzeit und die Reversierzeit von positiver auf negative Maximalgeschwindigkeit vermindert. Beispielsweise kann die Reversierzeit von 16,5s auf 12s verkürzt werden, wenn man die Ruckzeit auf 2s heruntersetzt.

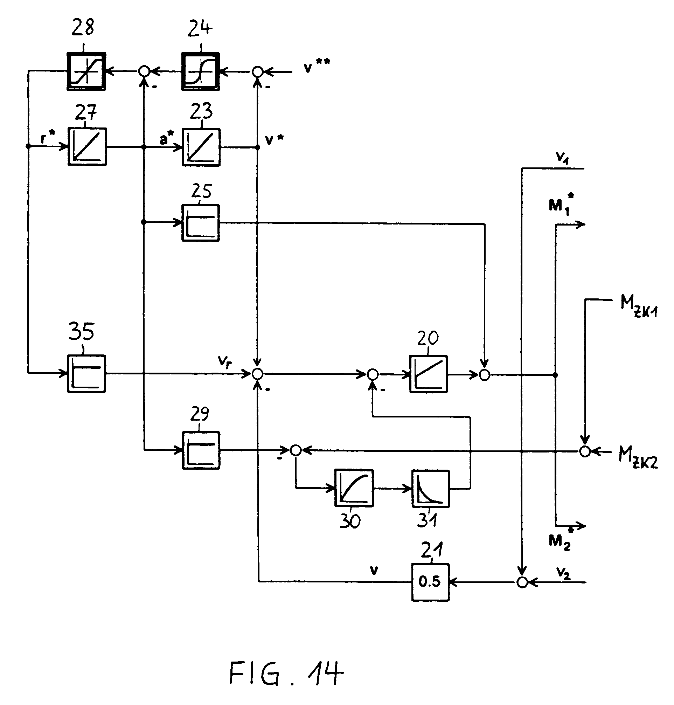

In Fig. 14 ist ein Beispiel für eine Ruckaufschaltung dargestellt, die bei einem Sanft-Hochlaufgeber mit Lastaufschaltung zur Anwendung kommt, wie er in Fig. 10 gezeigt ist. Die Ruckaufschaltung 35 verwendet den Ruckwert r* aus dem Sanft-Hochlaufgeber 26, multipliziert ihn mit einem vorberechneten Faktor und fügt diese Größe als zusätzlichen Geschwindigkeits-Sollwert $v_r$ dem Geschwindigkeitsregler 20 zu. Dieser Zusatzwert $v_r$ berechnet sich zu $v_r = T_5/(2c \cdot T_H \cdot T_R)$, wobei mit der Hochlaufzeit $T_H = 5s$, der Ruckzeit $T_R = 2s$ und den anderen bekannten Größen $v_r = 0{,}0301 \cdot v_N$ erhalten wird.

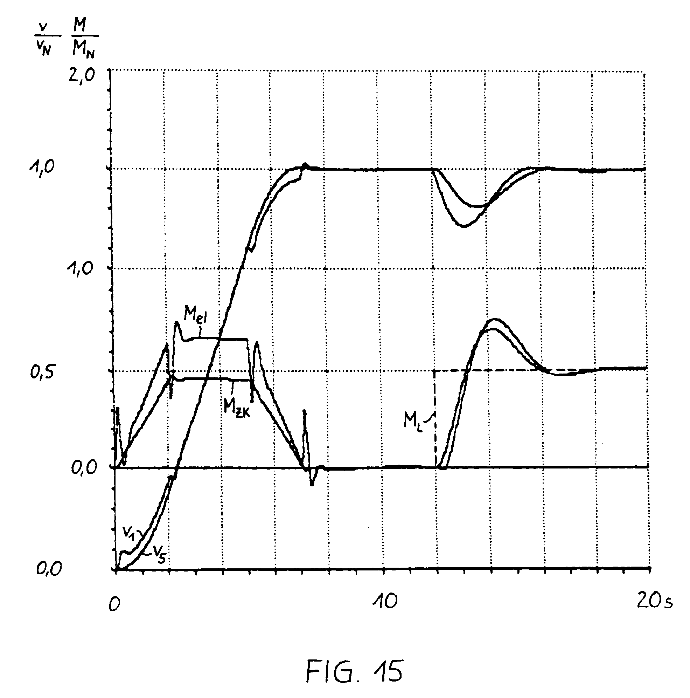

Wie in Fig. 15 für einen Anfahrvorgang ohne wirksame Lose zu sehen ist, wird während der ersten Ruckzeit (t=0-2s) die Motorgeschwindigkeit $v_1$ um $v_r$ erhöht, dagegen wird sie in der zweiten Ruckzeit (t=4,5-6,5s) um den gleichen Wert abgesenkt. Diese Geschwindigkeits-Sollwertstöße bewirken in den Motoren Momentenspitzen mit einer Höhe des ca. 0,3 fachen Nennwertes; sie sind also ohne weiteres zulässig.

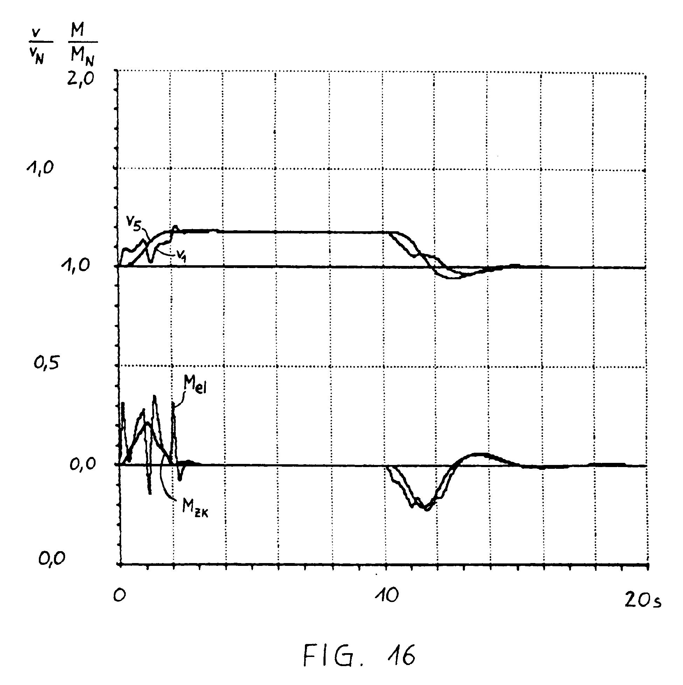

Die Aufschaltung der konstanten Größe $v_r$ während der Ruckzeiten bewirkt, daß die Differenz zwischen Motorweg $s_1$ und Oberbauweg $s_5$ linear zunimmt. Dadurch steigt auch das Zahnkranzmoment $M_{ZK}$ entsprechend an. Nach der Ruckzeit bleiben der Differenzweg $s_1-s_5$ und das Zahnkranzmoment $M_{ZK}$ konstant, es wurde genau das Moment erreicht, welches zum vollen Beschleunigen des Oberbaues 5 erforderlich ist. Während der zweiten Ruckzeit nimmt es in gleicher Weise wieder ab. Diese Methode der Vermeidung von Schwingungen beim Führungsverhalten ermöglicht also Ruckzeiten, die kleiner sind als die Periodendauer $T_{pl}$ der ersten Eigenfrequenz des Systems und funktioniert auch dann noch fehlerfrei, wenn eine gewünschte Drehzahländerung so klein ist, daß die maximale Beschleunigung nicht erreicht wird (Fig. 16).

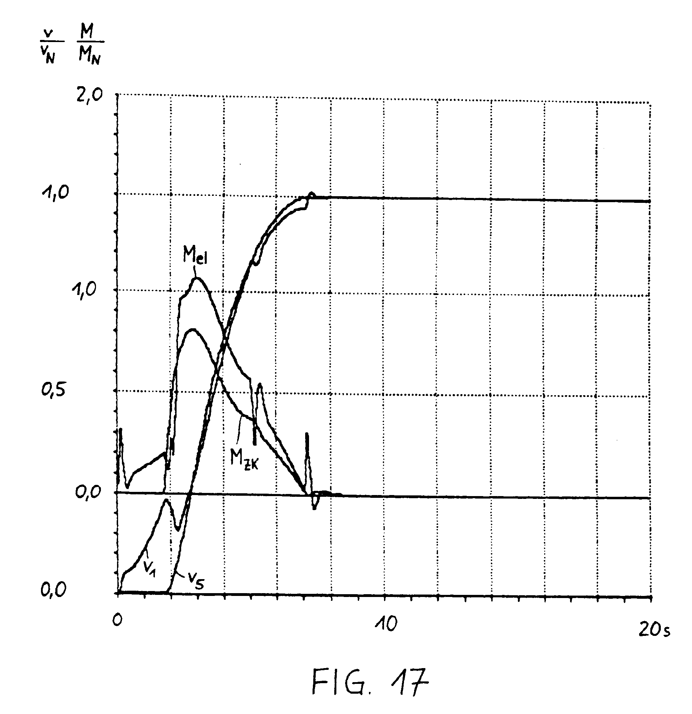

Fig. 17 zeigt das Anfahren mit voll wirksamer Lose. Das maximale Zahnkranzmoment $M_{ZK}$ steigt nur bis zum 0,8fachen Nennmoment an.

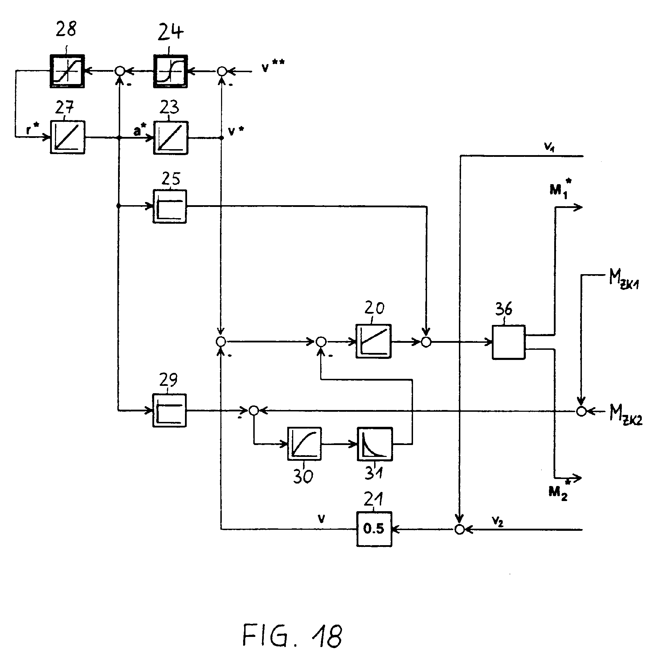

Unter verspannten Antrieben versteht man Antriebe, die im Idealfall nur Zahnkranzmomente in einer Richtung erzeugen, d.h. die Zähne in den Getriebestufen liegen immer an der gleichen Zahnflanke an. Hierzu erhalten die Momentenregelungen der beiden Motoren unterschiedliche Sollwerte $M_1^*$ und $M_2^*$, die, wie Fig. 18 zeigt, in einem Sollwertspalter 36 aufgeteilt werden. Für den Einsatz verspannter Antriebe müssen folgende Voraussetzungen erfüllt sein. Zum einen müssen die Antriebe in 4-Quadrantenausführung bereitgestellt werden, da sich wegen des Beschleunigungsanteils das Vorzeichen des Motormoments umkehren kann. Zum anderen müssen bei Schwenkwerken mit Kugelbahnlagerung, d. h. ohne Königszapfen, am Zahnkranz gegenüberliegende Antriebe das gleiche Moment führen.

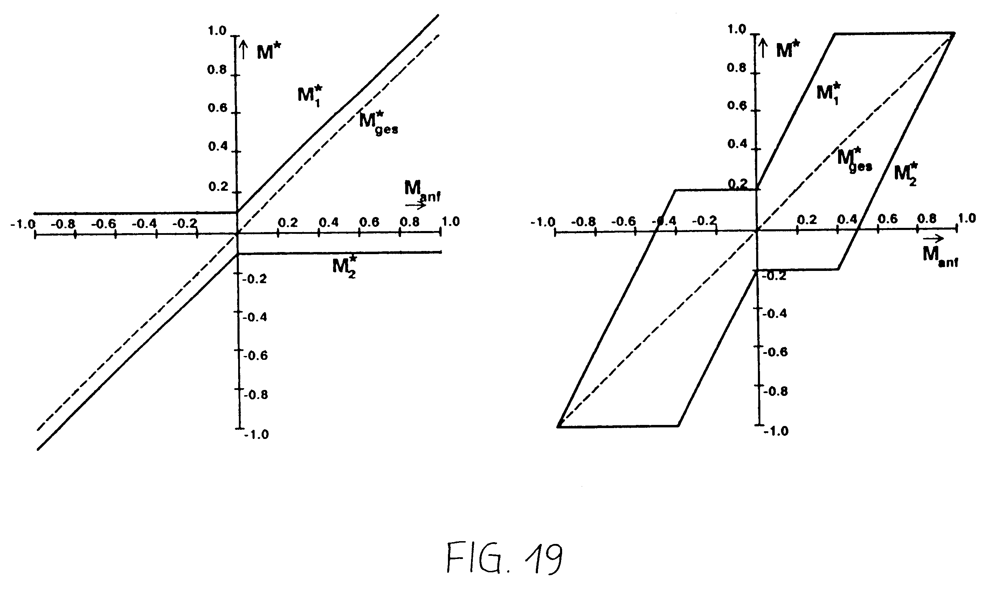

In Fig. 19 links sind die Kennlinien für die Vollverspannung dargestellt; die Momentenanforderung $M_{anf}$ kommt vom Geschwindigkeitsregler 20. Während z.B. bei positiver Momentenanforderung $M_{anf}$ Motor 2 ein kleines Moment $M_2^*$ zum Verspannen erzeugt, liefert Motor 1 das benötigte Moment $M_1^*$ für die Beschleunigung und Belastung des Oberbaues 5. Das Summenmoment $M_{ges}^*$ ist gestrichelt eingezeichnet. Bei Beschleunigungsvorgängen erhalten natürlich beide Motoren - wie bisher auch - ihr erforderliches Beschleunigungsmoment.

Regelungstechnisch arbeitet diese Verspannungsart sehr hochwertig, weil keine Stöße mehr auftreten und keine Lose mehr durchlaufen werden muß. Als Nachteil muß jedoch die erhöhte Motor- und Getriebeleistung in Kauf genommen werden, da statt bisher zwei jetzt nur noch ein Motor arbeitet.

Fig. 19 rechts zeigt die teilverspannten Momentenkennlinien. Bei einer Momentenanforderung $M_{anf}$ bis zum ca. 0,5 fachen Nennmoment ist die Verspannung voll in Betrieb, bei höheren Werten wird diese aufgegeben, weil der bisher verspannte Motor jetzt auch mit positivem Moment mitarbeitet. Der Vorteil dieser Kennlinienart liegt darin, daß man mit Motoren und Getrieben wie bisher auskommt und bis zum halben Nennmoment eine volle Verspannung erreicht. Nachteilig kann sich auswirken, daß z.B. während einer Beschleunigungsphase die Lose zweimal durchlaufen werden müßte, allerdings nur von einem Motor.

**Patentansprüche**

1. Verfahren zur Verringerung von Schwingungen bei Laststößen bei geschwindigkeitsgeregelten Antrieben mit schwingungsfähiger mechanischer Anordnung (1-9), bei dem eine Lastaufschaltung (30, 31) vorgesehen ist, die bei Laststößen absenkend in die Geschwindigkeitsregelung (20) des Antriebs (1, 2) eingreift und hierdurch eine Schwingungsdämpfung bewirkt,
**dadurch gekennzeichnet,**
daß bei der Lastaufschaltung statische Lastanteile herausgefiltert werden (31) und daß zusätzlich zu der Lastaufschaltung (30, 31) eine Ruckaufschaltung (35) auf die Geschwindigkeitsregelung (20) wirkt.

2. Verfahren nach Anspruch 1,
**dadurch gekennzeichnet,**
daß die Lastaufschaltung (30, 31) um einen Lastanteil verringert wird, der sich unmittelbar proportional zu Beschleunigungen (a*) aufgrund von Änderungen des Geschwindigkeits-Sollwertes (v*) der Geschwindigkeitsregelung (20) verhält.

3. Verfahren nach Anspruch 2,
**dadurch gegekennzeichnet,**
daß der Geschwindigkeitsregelung (20) der Geschwindigkeits-Sollwert (v*) aus einem Hochlaufgeber (26) vorgegeben wird, der Mittel (23, 24) zur Begrenzung der Beschleunigung (a*) enthält, und daß der dem Hochlaufgeber (26) entnehmbare Beschleunigungswert (a*) zur Bildung des beschleunigungsproportionalen Lastanteils herangezogen wird (29).

4. Verfahren nach einem der vorangehenden Ansprüche,
**dadurch gekennzeichnet,**
daß der Hochlaufgeber (26) Mittel (27, 28) zur Begrenzung des Rucks (r*), d. h. der Änderung der Beschleunigung (a*), enthält, und daß der dem Hochlaufgeber (26) entnehmbare Wert für den Ruck (r*) zur Ruckbeaufschlagung der Geschwindigkeitsregelung (20) herangezogen wird.

5. Verfahren nach einem der vorangehenden Ansprüche,
**dadurch gekennzeichnet,**
daß bei mehreren Antrieben (1, 2) für die mechanische Anordnung diese Antriebe (1, 2) parallel aus der Geschwindigkeitsregelung (20) angesteuert werden und daß die Lastaufschaltung für alle Antriebe (1, 2) gemeinsam erfolgt.

6. Verfahren nach einem der Ansprüche 1 bis 4,
**dadurch gekennzeichnet,**
daß bei mehreren Antrieben (1, 2) für die mechanische Anordnung der von der Geschwindigkeitsregelung (20) erzeugte Momentensollwert (M*) unterschiedlich auf die einzelnen Antriebe (1, 2) aufgeteilt wird (36), wodurch die einzelnen Antriebe (1, 2) verspannt werden.

7. Anordnung zur Verringerung von Schwingungen bei Laststößen bei geschwindigkeitsgeregelten Antrieben mit schwingungsfähiger mechanischer Anordnung (1 - 9), mit einer Einrichtung zur Lastaufschaltung (30, 31), die bei Laststößen absenkend in die Geschwindigkeitsregelung (20) des Antriebs (1, 2) eingreift und hierdurch eine Schwingungsdämpfung bewirkt,
**dadurch gekennzeichnet,**
daß die Einrichtung (30, 31) zur Lastaufschaltung eine Einrichtung (31) zur Herausfilterung statischer Lastanteile enthält und daß eine Einrichtung (35) zur Ruckaufschaltung vorgesehen ist, die zusätzlich zu der Lastaufschaltung (30, 31) auf die Geschwindigkeitsregelung (20) wirkt.

## Claims

1. Process to reduce vibrations caused by load impulses in speed-controlled drives having a mechanical arrangement (1 - 9) capable of vibrating, in which a load compensation (30, 31) is provided, which upon load impulses engages in a reducing manner into the speed control (20) of the drive (1, 2) and in this way effects a vibration absorption, characterized in that with the load compensation static load parts are filtered out (31) and in that in addition to the load compensation (30, 31) a jerk compensation (35) acts on the speed control (20).

2. Process according to claim 1, characterized in that the load compensation (30, 31) is reduced by a load part which is directly proportional to accelerations (a*) due to changes of the desired speed value (v*) of the speed control (20).

3. Process according to claim 2, characterized in that the desired speed value (v*) is specified for the speed control (20) from an acceleration rate limiter (26) which contains means (23, 24) to limit the acceleration (a*), and in that the acceleration value (a*) which can be taken from the acceleration rate limiter (26) is used to form the acceleration-proportional load part (29).

4. Process according to one of the preceding claims, characterized in that the acceleration rate limiter (26) contains means (27, 28) to limit the jerk (r*), i.e. the change of the acceleration (a*), and in that the value for the jerk (r*) which can be taken from the acceleration rate limiter (26) is used for the jerk loading of the speed control (20).

5. Process according to one of the preceding claims, characterized in that with several drives (1, 2) for the mechanical arrangement these drives (1, 2) are controlled in parallel from the speed control (20) and in that the load compensation takes place for all drives (1, 2) together.

6. Process according to one of claims 1 to 4, characterized in that with several drives (1, 2) for the mechanical arrangement the desired torque value (M*) produced by the speed control (20) is apportioned differently to the individual drives (1, 2) (36), whereby the individual drives (1, 2) are braced.

7. Arrangement to reduce vibrations caused by load impulses in speed-controlled drives having a mechanical arrangement (1 - 9) capable of vibrating, with a device for load compensation (30, 31) which upon load impulses engages in a reducing manner into the speed control (20) of the drive (1, 2) and in this way effects a vibration absorption, characterized in that the device (30, 31) for the load compensation contains a device (31) to filter out static load parts and in that a device (35) for jerk compensation is provided, which in addition to the load compensation (30, 31) acts on the speed control (20).

## Revendications

1. Procédé de réduction de vibrations provoquées par des secousses dans des entraînements à vitesse réglée à mécanismes susceptibles de vibrer (1-9), procédé avec lequel il est prévu une compensation de charge (30, 31) qui, en présence de secousses, intervient dans la régulation de vitesse (20) de l'entraînement (1, 2) en abaissant celle-ci et provoque par ce moyen un amortissement des vibrations, ce procédé étant caractérisé en ce que, avec la compensation de charge, des parties de charge statique sont filtrées (31) et en ce que, en plus de la compensation de charge (30, 31), une compensation de choc (35) agit sur la régulation de vitesse (20).

2. Procédé selon la revendication 1, caractérisé en ce que la compensation de charge (30, 31) est diminuée d'une partie de la charge qui se comporte de manière directement proportionnelle aux accélérations (a*) dues à des modifications de la valeur de consigne de la vitesse (v*) de la régulation de vitesse (20).

3. Procédé selon la revendication 2, caractérisé en ce que la valeur de consigne de la vitesse (v*) est fournie préalablement à la régulation de vitesse (20) à partir d'un accélérateur à pleine vitesse (26) qui contient des moyens (23, 24) pour limiter l'accélération (a*) et en ce que la valeur de l'accélération (a*) issue de l'accélérateur à pleine vitesse (26) est utilisée pour la formation de la partie de la charge proportionnelle à l'accélération (29).

4. Procédé selon l'une des revendications précédentes, caractérisé en ce que l'accélérateur à pleine vitesse (26) contient des moyens (27, 28) pour limiter le choc (r*), c'est-à-dire le changement de l'accélération (a*), et en ce que la valeur donnée par l'accélérateur à pleine vitesse (26) pour le choc (r*) est utilisée pour intervenir dans la régulation de vitesse (20).

5. Procédé selon l'une des revendications précédentes, caractérisé en ce que, lorsqu'il y a plusieurs entraînements (1, 2) pour l'agencement mécanique, ces entraînements (1, 2) sont commandés de manière parallèle à partir de la régulation de vitesse (20) et en ce que la compensation de charge a lieu de façon commune pour tous les entraînements (1, 2).

6. Procédé selon l'une des revendications 1 à 4, caractérisé en ce que, lorsqu'il y a plusieurs entraînements (1, 2) pour l'agencement mécanique, la valeur de consigne du moment (M*) produite par la régulation de vitesse (20) est répartie différemment sur les entraînements individuels (1, 2), ce qui fait que les entraînements (1, 2) sont mis en tension.

7. Dispositif de réduction de vibrations provoquées par des secousses dans des entraînements à vitesse réglée à mécanismes susceptibles de vibrer (1-9), comportant un dispositif de compensation de charge (30, 31) qui, en présence de secousses, intervient dans la régulation de vitesse (20) de l'entraînement (1, 2) en abaissant celle-ci et provoque par ce moyen un amortissement des vibrations, ce dispositif étant caractérisé en ce que le dispositif (30, 31) de compensation de charge contient un dispositif (31) pour filtrer les parties de charge statique et en ce qu'il est prévu un dispositif (35) de compensation de choc qui, en plus de la compensation de charge (30, 31), agit sur la régulation de vitesse (20).

FIG. 1

EP 0 617 807 B1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19